# EUROPEAN PATENT SPECIFICATION

(11) **EP 2 634 048 B1**
(45) Date of publication and mention of the grant of the patent: **19.08.2015**
(21) Application number: 13382062.1
(22) Date of filing: 28.02.2013
(51) Int. Cl.: B60R 21/38, E05D 3/12, E05D 3/14

(54) **Hinge for the articulated attachment of a hood to the chassis of a vehicle**
Scharnier zur Gelenkverbindung einer Motorhaube an das Chassis eines Fahrzeugs
Charnière pour la liaison articulée d'un capot sur le châssis d'un véhicule

(30) Priority: 02.03.2012 ES 201230318
(43) Date of publication of application: 04.09.2013
(73) Proprietor: Flexngate Automotive Iberica, S.A., 08520 Les Franqueses Del Valles (ES)
(72) Inventor: Agell Merino, Aitor, 08221 TERRASSA (ES); Petrova Borislavova, Assia, 08110 MONTCADA I REIXAC (ES)
(74) Representative: Sugrañes Patentes y Marcas

(56) References cited:
- EP-A1- 1 880 907
- EP-A1- 2 364 887
- DE-A1-102005 007 903
- DE-A1-102005 022 924
- DE-A1-102006 062 252
- DE-A1-102008 011 722
- DE-A1-102009 040 413

## Description

### Technical Field of the Invention

The invention relates to a hinge for the articulated attachment of a hood to the chassis of a vehicle, the hinge being of the type comprising a hood support bar attached in an articulated manner, under normal conditions of use of the hinge, to a support body intended for being securely held on the chassis of the vehicle; and an electromechanical transducer converting an electrical signal into a mechanical drive when it is activated and causing the mentioned hood support bar to move in one direction with an upward component in order to lift the hood and to protect a pedestrian from the impact on the motor components arranged immediately below said hood.

### Background of the Invention

Patent document DE 10 2005 022 924 discloses a hinge comprising a pyrotechnic device which, when activated, causes the relative movement between two components of the hinge which in normal conditions are securely held.

More specifically, the hinge comprises an articulated parallelogram in which an upper bar attached by means of respective levers articulated to a support body intended for being fixed to the chassis of an automotive vehicle is distinguished. The hinge further comprises means for anchoring to the upper bar a hood support bar, which under normal conditions of use of the hinge will move together with the upper bar during the hood opening and closing operations.

The hinge comprises a pyrotechnic device disabling the anchoring of the support bar to the upper bar of the hinge when it is activated, further causing an upward movement of the mentioned hood support bar which in turn causes the latter to be lifted with respect to the engine of the vehicle in an area susceptible of receiving the impact from the head of a pedestrian in the event of someone being hit.

One drawback of this hinge is that the pyrotechnic device, one of the ends of which is integral with the upper bar of the hinge, moves together with said for automobile manufacturers because it creates serious safety problems, particularly because the wiring which powers the pyrotechnic device also moves during the hood opening and closing operations, in addition to the fact that the end connected to the connection terminal with the pyrotechnic device changes its orientation according to the immediate position of the hood during the mentioned opening and closing operations.

The patent document DE 10 2008 011722, which shows the preamble of claim 1, describes a single articulated hinge having the same drawbacks as the previously described hinge. In this single hinge one of the ends of the pyrotechnic device moves together with the upper bar of the hinge during the hood opening and closing operations.

Laying a wiring between moving parts or components of a structure or mechanism, such as the hinge in these cases, is not only undesired but is sometimes prohibited by the safety regulations applicable to the sector. The purpose is to prevent the cable from being accidentally damaged by the moving parts of the mechanism.

The main objective of the present invention is therefore a hinge solving this drawback, preventing the arrangement of the power cable of the transducer between the moving parts of the hinge and at the same time preventing the undesired movements of the cable during the hood opening and closing operations.

### Disclosure of the Invention

The hinge of the invention is of the types comprising a structure articulated in a plane of movement incorporating a support body, intended for being securely held on the chassis of the vehicle; an upper bar linked to the mentioned support body through at least one articulation; a hood support bar; and retention means for securely anchoring the hood support bar to the upper bar under normal conditions of use of the hinge by means of a latch assembled on the support bar; the hinge further comprising an electromechanical transducer converting an electrical signal into a mechanical drive, with a first end and a second end susceptible of moving away from one another in the plane of movement of the structure when the transducer is activated and changes from adopting a retracted position to adopting an extended position.

The hinge is essentially **characterized in that** it comprises an upper articulated attachment connecting the first end of the transducer and the latch, which is axially aligned with the articulation linking the upper bar and the support body when the transducer adopts its retracted position and the support bar is anchored to the upper bar, and a lower articulated attachment, connecting the second end of the transducer to a point arranged on the articulated structure keeping its distance with respect to the articulation during the hood closing and opening operations under normal conditions of use of the hinge, i.e., while the support bar is anchored to the upper bar, whereas it acts as a support point when the transducer is extended, causing the upper articulated attachment to move sufficiently to operate the latch, the anchoring of the support bar to the upper bar being disabled, and to lift it, dragging the support bar along in its movement, to a position of impact.

According to a variant of the invention, the latch is a rotary latch comprising a portion configured like a hook susceptible of adopting an angular anchoring position (A), in which the hook securely surrounds and holds a projection provided for such purpose in the upper bar; and an angular release position, in which it does not surround the projection and does not interfere with the relative movement of the hood support bar with respect to the upper bar, the upper articulated attachment being off-center with respect to the rotating shaft of the latch.

According to another feature, the rotary latch is subjected to the action of elastic means which tend to arrange it in its anchoring position (A).

The hinge can be a single or a double articulated hinge.

Therefore, in one embodiment the articulation linking the upper bar and the support body is a rotary attachment between the upper bar and the support body of the structure, the assembly forming a hinge with a single center of rotation, and the lower articulated attachment of the transducer is arranged in or is integral with the support body.

In another embodiment, the structure comprises a first lever and a second lever attached in a rotating manner and by means of respective articulations to the bar and to the support body, the assembly forming a kind of articulated parallelogram.

The invention contemplates that the lower articulated attachment is arranged on the first lever adjacent to the articulation attaching said first lever to the support body.

The articulated attachment is preferably arranged below the imaginary straight line attaching the articulations attaching the first lever, the upper bar and the support body, such that the elongation of the transducer tends to apply a moment on the first lever in a direction opposite the direction of rotation of the first lever during the hood opening operation.

The invention also contemplates that, as an alternative, the articulated attachment is assembled or is supported in the support body and is axially aligned with the articulation attaching the first lever and the mentioned support body.

According to another feature of the invention, the retention means further comprise an extending auxiliary bar attached in an articulated manner at its ends to the upper bar and to the hood support bar, tugging and guiding the movement of the hood support bar when the transducer is operated.

The auxiliary bar can be formed by two segments attached to one another in an articulated manner.

In one variant, this auxiliary bar is prolonged beyond its articulated attachment with the upper bar to form a retaining extension limiting the elongation of the transducer by abutting said extension with a stop body integral with the support body or with the upper bar.

In an embodiment of the invention, the electromechanical transducer is formed by a pyrotechnic actuator comprising a cylinder and plunger assembly.

### Brief Description of the Drawings

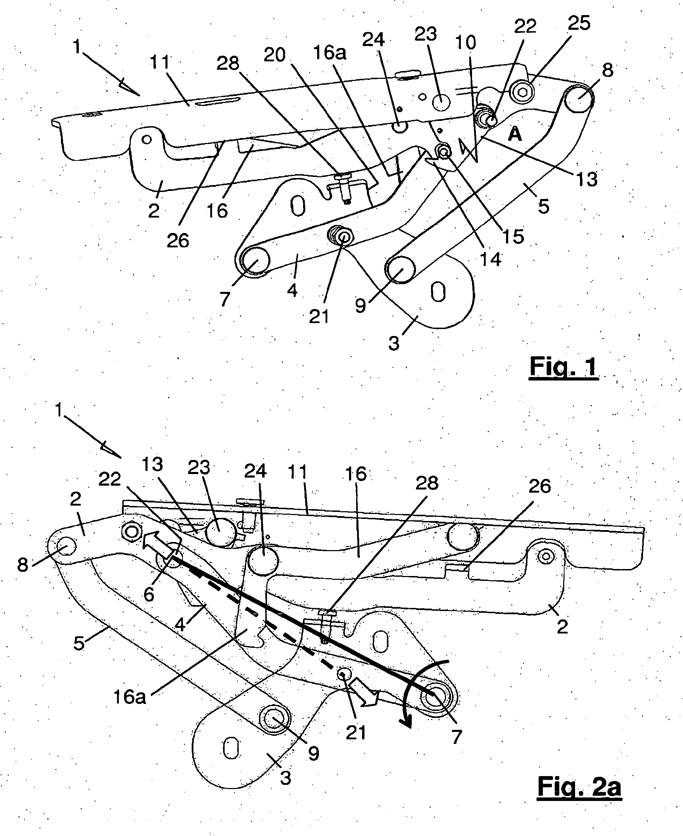

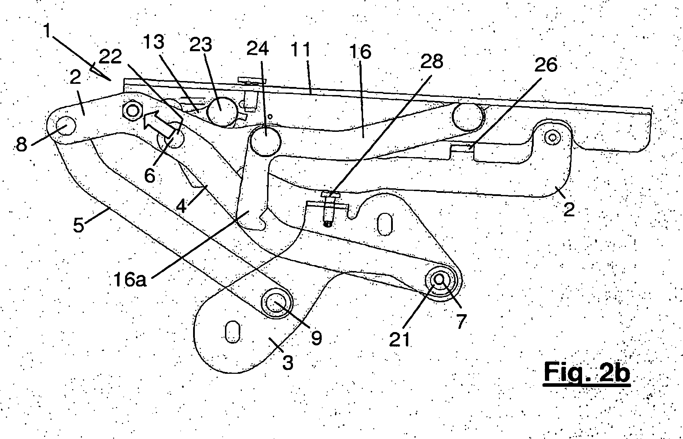

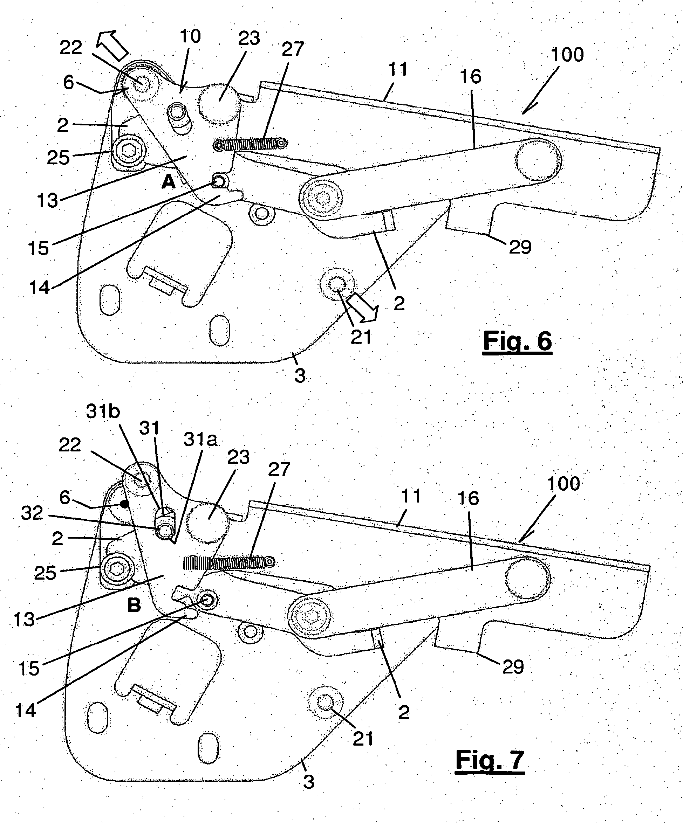

Figures 1, 2a and 3 to 5 and 11 show a double articulated hinge implementing the solution according to the invention; Figure2b shows an alternative variant of this double articulated hinge; and Figures 6 to 9 show a single hinge with a single point of articulation also implementing the solution according to the invention. More specifically:
Figures 1 and 2a are respective side views according to different sides of the double articulated hinge in a normal hood closing position, in which the electromechanical transducer is not shown;
Figure 2b is a side view of an alternative for the hinge of Figure 2a, in which the location of the lower articulated attachment of the transducer to the structure of the hinge has been changed;
Figure 3 is a side view of the hinge of Figures 1 and 2a a moment after the transducer has been actuated;
Figure 4 is a side view of the hinge of Figure 3, when the transducer adopts its extended position the hood support bar having been moved in an upward direction with respect to the position that it occupied in Figures 1 and 2a;
Figure 5 is a side view of the hinge according to the invention in a normal hood opening position, in which the electromechanical transducer is not shown;
Figure 6 is a side view of the single hinge in a normal hood closing position;
Figure 7 is a side view of the hinge of Figure 6 a moment after the transducer has been actuated;
Figure 8 is a side view of the hinge when the transducer adopts its extended position the hood support bar having been moved in an upward direction with respect to the position that it occupied in Figures 6;
Figure 9 is a slight perspective view of the hinge of Figure 6 in which the transducer is shown;
Figure 10 is a side view of the hinge of Figure 6 in a normal hood opening position; and
Figure 11 is a side view of another alternative for the hinge of Figure 2a.

### Detailed Description of the Invention

Figures 1 a 5 show a double articulated hinge 1 whereas Figures 6 to 10 show a single hinge 100 with a single center of rotation. As will be shown below the invention is applicable in both types of hinge. The same reference numbers have been used in the drawings to designate the components which are the same in both embodiments.

The two hinges 1 and 100 comprise a structure articulated in a plane of movement comprising an upper bar 2 linked to a respective support body 3 intended for being fixed in a known manner to the chassis of a vehicle. In the first case, said structure comprises a first lever 4 and a second lever 5 attached in a rotating manner and by means of respective articulations 6 to 9 to the bar 2 and to the support body 3, the assembly forming a kind of articulated parallelogram, whereas in the second case, the structure comprises a single articulation 6 forming a rotary attachment between the upper bar 2 and the support body 3, the assembly forming a hinge with a single center of rotation.

The hinge 1 is generally suitable for the hood to move upwards and forwards upon being lifted to prevent its rear edge from colliding with a frame enclosing the hood. Conventionally, the articulated lever 4 is longer than the other articulated lever 5, and the articulations 6, 8 in the upper bar 2 are arranged closer to one another than the articulations 7, 9 in the support body 3. Therefore, the rotating shaft of the hood moves forwards upon being lifted.

In the case of the hinge 100, the single articulation 6 allows the hood to rotate about a rotating shaft normal to the plane of movement of the structure.

The two hinges 1 and 100 further comprise a support bar 11 on which the hood is fixed in practice; and retention means 10 for securely anchoring the hood support bar 11 to the upper bar 2 under normal conditions of use of the hinge. These retention means comprise a rotary latch 13 rotating about a rotating shaft 23, integral with the hood support bar 11, comprising a portion configured like a hook 14 susceptible of adopting an angular anchoring position (A) in which the hook 14 securely surrounds and holds a projection 15 provided for such purpose in the upper bar 2; and an angular release position (B) in which it does not surround the projection and does not interfere with the relative movement of the hood support bar 11 with respect to the upper bar 2.

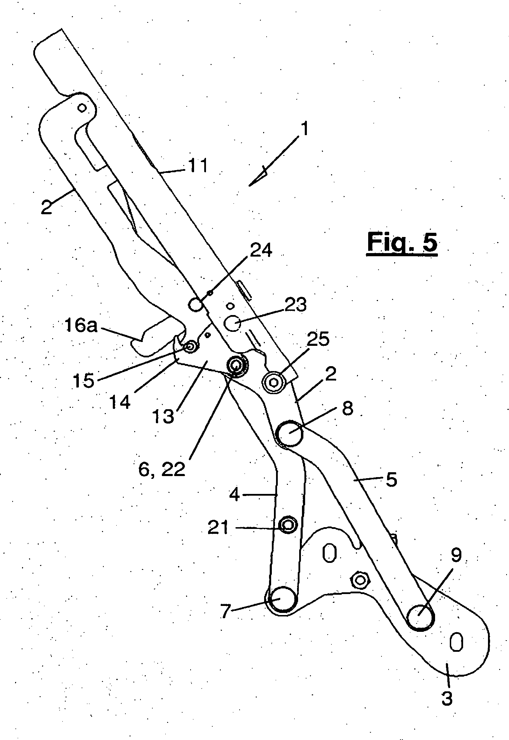

Figures 1 and 2a show the hinge 1 in a normal closing position and the latch 13 adopting its anchoring position (A). In this position, the hood support bar 11 and the upper bar 2 are integral and move together during the hood opening and closing operations. Figure 5 shows the position adopted by hinge 1 in its normal opening position.

It must also be pointed out that, for the rotary latch 13 to maintain its anchoring position (A), it is subjected to the action of elastic means (not depicted in this variant) which tend to arrange it in said position, i.e., they would apply a clockwise moment thereto always with reference to Figure 1.

On the other hand, there is arranged on the upper bar 2 a bolt 25 receiving the support of the rear end of the hood support bar 11, and which bolt is necessary so that the opening movement imparted on the hood is transmitted to the upper bar 2. Removing the bolt 25 or an element provided for the same purpose would cause the hood, and accordingly the support bar 11, to rotate about the rotating shaft 23 attaching the latch 13 in a clockwise direction always with reference to Figure 1. It is envisaged that the position of the bolt 25 can be adjusted or that the bolt is off-center, for example, in order to be able to adjust the relative position of the components of the structure of the hinge 1 for correct alignment or coupling.

Similarly, the upper bar 2 is provided with a support element 25 intended for transmitting the movement imparted to the hood during the hood closing operation to said upper bar 2 when starting from the position depicted in Figure 5.

In practice, the hood support bar 11, due to the effect of the latch 13, is pressed simultaneously against the bolt 25 and the support element 26 of the upper bar 2, when the latch 13 is in its anchoring position (A).

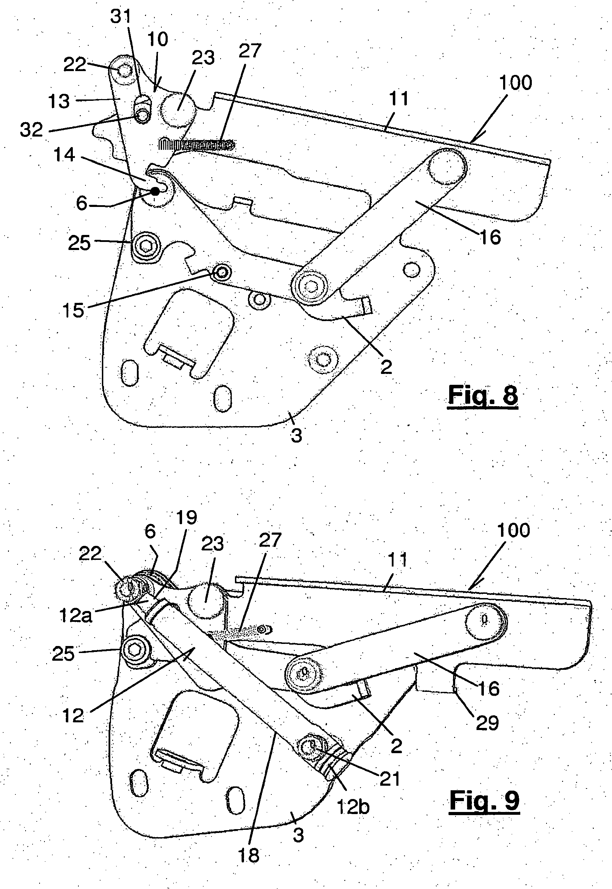

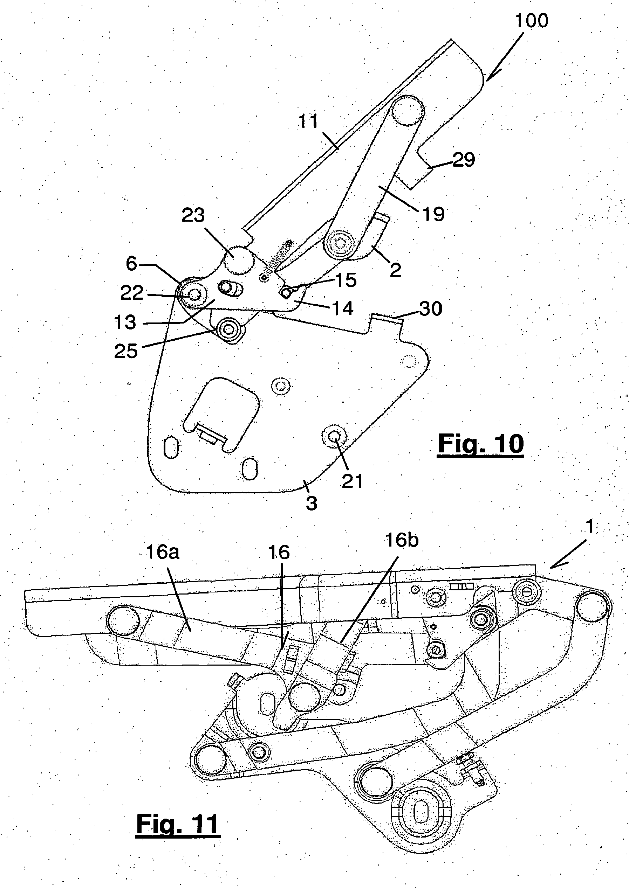

The effect produced by the latch 13 on the hinge 100 is the same as that produced on the hinge 1. Figures 6 and 9 show the hinge 100 in its normal closing position whereas Figure 10 shows the same hinge in its normal opening position. How the hood support bar 11 and the upper bar 2 move together from the closing position to the opening position of the hinge 100 can be seen. In Figures 6 to 9 the elastic means 27 which tend to arrange the latch 13 in its anchoring position (A) are visible. In the example, the elastic means are formed by a helical tension-spring.

Both hinges 1 and 100 are further provided with an electromechanical transducer 12 converting an electrical signal into a mechanical drive, with a first end and a second end 12a, 12b susceptible of moving away from one another in the plane of movement of the structure when the transducer is activated, such that it changes from adopting a retracted position to adopting an extended position.

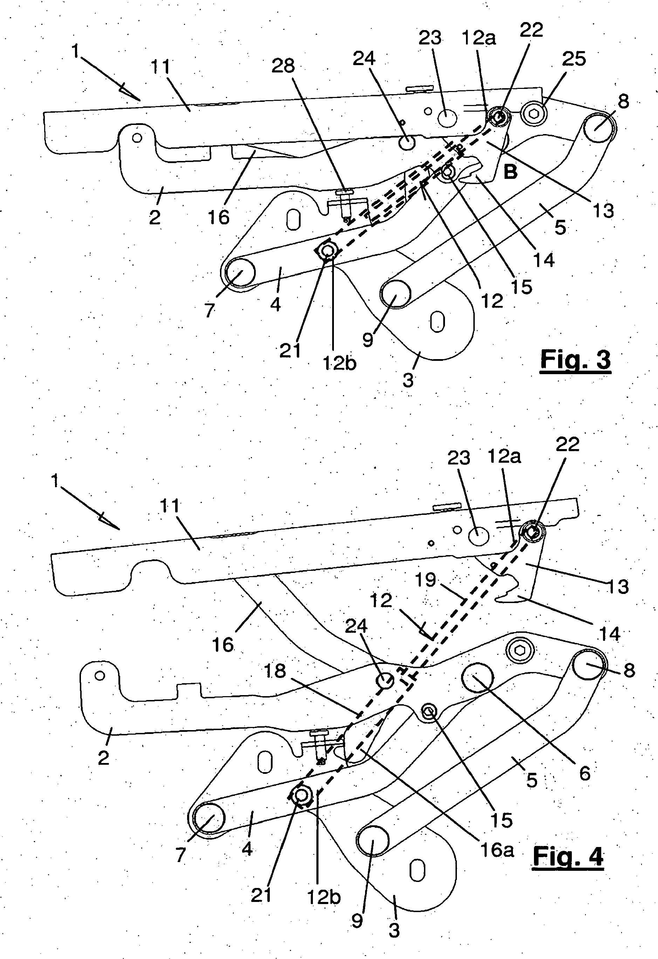

In the examples, the transducer 12 is of the type formed by a pyrotechnic actuator comprising a cylinder 18 and plunger 19 assembly, indicated in Figure 4 of hinge 1 and in Figure 9 of hinge 100.

The purpose of this transducer 12 and particularly its connection to the different components of the structure is explained below with reference to the hinge 1.

Figures 1, 2a and 3 to 5 show that the hinge 1 is provided with an upper articulated attachment 22 and a lower articulated attachment 21. The upper articulated attachment 22 connects the first end 12a of the transducer 12 with the latch 13 whereas the lower articulated attachment 21 connects the second end 12b of the transducer with the first lever 4, at a point arranged adjacent to the articulation 7 attaching said first lever 4 with the support body 3.

It should be noted that the upper articulated attachment 22 is axially aligned with the articulation 6 attaching the upper bar 2 with the first lever 4 when the transducer 12 adopts its retracted position and the support bar 11 is anchored to the upper bar 2. In Figures 1 and 2, the articulated attachment 22 and the articulation 6 overlap accordingly.

This location of the articulated attachment 22 enables the ends 12a and 12b of the transducer to keep their distance during the hood closing and opening operations under normal conditions of use of the hinge 1, i.e., while the support bar 11 is anchored to the upper bar 2.

Starting from the position depicted in Figures 1 and 2a, when the transducer is activated its ends 12a and 12b tend to suddenly separate from one another. Due to the fact that the articulated attachment 21 is arranged below the imaginary straight line 17 attaching the articulations 6, 7 attaching the first lever 4, the upper bar 2 and the support body 3 (see Figure 2a), the elongation of the transducer 12 tends to apply a moment on the lever 4 in a direction opposite the direction of rotation of the lever 4 during the hood opening operation. The lever 4 being prevented from rotating in this direction by the adjustable, mechanical stop 28, the end 12a of the transducer 12 moves in the direction indicated by the arrow of Figure 2a causing the upper articulated attachment 22 to move which, in a first phase of actuation, causes the latch 13 to rotate towards its release position (B), as illustrated in Figure 3.

For this purpose, it can be seen in the drawings that the location of the upper articulated attachment 22 is off-center with respect to the rotating shaft 23 of the latch 13.

When the latch 13 adopts its release position (B), the anchoring of the support bar 11 to the upper bar 2 is disabled and, as a result, the movement of the end 12a of the transducer causes, in a second phase of actuation, the upper articulated attachment 22 and therefore also the latch 13 to be lifted, which in the upward movement thereof drags the support bar 11 along to a position of impact, in which the hood is arranged in a higher position with respect to its original position. This position of impact is depicted in Figure 4.

According to this embodiment, the lower end 12b of the transducer hardly moves during the hinge opening and closing operations.

Alternatively, as shown in Figure 2b, the lower articulated attachment 21 can be supported in the support body 3, being arranged axially aligned with the articulation 7 attaching the lever 4 and the mentioned support body 3. According to this embodiment, the lower end 12b of the transducer 12 would only change orientation, without moving with respect to the support body 3, making this embodiment particularly interesting.

In both cases, the power wiring of the transducer 12, connected to a connection terminal arranged at the end 12b of the transducer 12 is not tugged nor was it forced to elongate and contract when the hinge 1 is opened and closed, respectively.

It can be pointed out in Figures 1 to 5 that the retention means 10 further comprise an extending auxiliary bar 16 attached in an articulated manner at its ends to the upper bar 2 and to the hood support bar 11 and tugging and guiding the movement of the support bar 11 in an ascending direction when the transducer 12 is operated.

Figures 2a and 2b show that this auxiliary bar 16 is prolonged beyond its articulated attachment 24 with the upper bar 2 to form a retaining extension 16a, limiting the elongation of the transducer 12 by abutting said extension 16a with a stop element 20 (see Figure 1) integral with the support body 3.

The invention contemplates that the auxiliary bar 16 is formed by two segments 16a and 16b attached to one another in an articulated manner, as illustrated in Figure 11

It must be noted that, due to the manufacturing tolerances typical of the production processes, assuring that the upper articulated attachment 22 and the articulation 6 are aligned, or that they have a perfect concentricity, is very difficult. For this reason, providing the hinge with an adjustment system which allows aligning the upper articulated attachment 22 and the articulation 6 when assembling the components of the structure or in a final phase, is envisaged. Such adjustment systems can be formed, by way of non-limiting example, by runners, cams, adjustment screws, etc.

The purpose of the transducer 12 and particularly its connection to the different components of the structure is now explained with reference to the hinge 100.

As in the variants of the hinge 1 described above, the upper and lower articulated attachments 21 and 22 of the transducer 12 (visible in Figure 9) to the structure keep their distance during the normal hood opening and closing operations.

As seen in Figure 6, the upper articulated attachment 22, connecting the first end 12a of the transducer 12 and the latch 13, is axially aligned with the single articulation 6 attaching the upper bar 2 and the support body 3 in a rotating manner when the transducer 12 adopts its retracted position and the support bar 11 is anchored to the upper bar 2 due to the effect of the latch 13, this being in its anchoring position (A).

The lower articulated attachment 21 in turn connects the second end 12b of the transducer 12 to the support body 3. The hinge 1 being a single hinge, the articulation 6 does not move during the hood closing and opening operations, therefore during these operations the ends 12a and 12b of the transducer keep their distance.

Starting from the position depicted in Figure 6, when the transducer 12 is activated, since the movement of its lower end 12b is prevented because it is attached in an articulated manner to a fixed component of the structure, specifically to the support body 3, the end 12a of the transducer moves in the direction indicated by the arrow of Figure 6, causing the upper articulated attachment 22 to move which causes, in a first phase of actuation, the latch 13 to rotate towards its release position (B), as illustrated in Figure 7.

Like the embodiments described with reference to the hinge 1, it can be seen in Figures 6 to 10 that the location of the upper articulated attachment 22 is off-center with respect to the rotating shaft 23 of the latch 13.

When the latch 13 adopts its release position (B) the anchoring of the support bar 11 to the upper bar 2 is disabled and, as a result, the movement of the end 12a of the transducer causes, in a second phase of actuation, the upper articulated attachment 22 and therefore also the latch 13 to be lifted, which in the upward movement thereof drags along the support bar 11 guided by the auxiliary bar 16 to a position of impact, in which the hood is arranged in a higher position, as shown in Figure 8.

To prevent the dragging force of the support bar 11 from being integrally born by the rotating shaft 23 of the latch 13, in the hinge 100 the latch 13 is provided with a slot 31 concentric with respect to the rotating shaft 23 of said latch 13, in which a fixed button 32 of the support bar 11 is inserted and slides.

As seen in Figure 7, when the latch 13 reaches the release position (B) the lower end 31a of the slot 31 abuts the button 32 and drags it upwards, lifting the support bar 11 as a result until arranging it in the position depicted in Figure 8.

It must be noted that, the opposite end 31 b of the slot 31 acts as a stop cooperating with the button 32 itself when the latch 13 tends to return to its original position, due to the effect of the elastic means 27, when the transducer stops transmitting a mechanical drive on the latch 13.

The path of movement of the end 21a of the transducer 12 is limited by a mechanical stop consisting in the example of two folded flaps 29 and 30, the latter being visible only in Figure 10, formed in the upper bar 2 and in the support body 3, respectively, the folded portions of which meet one another and interlock when the hood support bar 11 reaches the position depicted in Figure 8.

According to this embodiment, the lower end 12b of the transducer 12 would only change orientation during the hood opening and closing operations, rotating about the articulated attachment 21, without moving with respect to the support body 3, making this embodiment of a single hinge 1 particularly interesting.

## Claims

1. A hinge (1, 100) for the articulated attachment of a hood to the chassis of a vehicle, comprising
- a structure articulated in a plane of movement incorporating a support body (3), intended for being securely held on the chassis of the vehicle; an upper bar (2), linked through at least one articulation (6) to the mentioned support body (3) directly or via a lever (4); a hood support bar (11); and retention means (10) for securely anchoring the hood support bar (11) to the upper bar (2) under normal conditions of use of the hinge by means of a latch (13) assembled on the support bar (11); the hinge further comprising
- an electromechanical transducer (12) converting an electrical signal into a mechanical drive, with a first end and a second end (12a, 12b) susceptible of moving away from one another in the plane of movement of the structure when the transducer is activated and changes from adopting a retracted position to adopting an extended position, the hinge is **characterized in that** it comprises
- an upper articulated attachment (22), connecting the first end (12a) of the transducer (12) and the latch (13), which is axially aligned with the articulation (6) linking the upper bar (2) and the support body (3) when the transducer (12) adopts its retracted position and the support bar (11) is anchored to the upper bar (2), and
- a lower articulated attachment (21), connecting the second end (12b) of the transducer (12) to a point, arranged on one of the support body (3) or the lever (4), that keeps its distance with respect to the articulation (6) during the hood closing and opening operations under normal conditions of use of the hinge, i.e., while the support bar (11) is anchored to the upper bar (2), whereas it acts as a support point when the transducer (12) is extended, causing the upper articulated attachment (22) to move sufficiently to operate the latch (13), the anchoring of the support bar (11) to the upper bar (2) being disabled, and to lift it, dragging the support bar (11) along in its movement, to a position of impact.

2. The hinge (1, 100) according to claim 1, **characterized in that** the latch (13) is a rotary latch, comprising a portion configured like a hook (14), susceptible of adopting an angular anchoring position (A), wherein the hook (14) securely surrounds and holds a projection (15) provided for such purpose in the upper bar (2); and an angular release position (B), wherein it does not surround the projection and does not interfere with the relative movement of the hood support bar (11) with respect to the upper bar (2), and **in that** the location of the upper articulated attachment (22) is off-center with respect to the rotating shaft (23) of the latch (13).

3. The hinge (1, 100) according to the preceding claim, **characterized in that** the rotary latch (13) is subjected to the action of elastic means (27) which tend to arrange it in its anchoring position (A).

4. The hinge (100) according to any one of the preceding claims, **characterized in that** the articulation (6) is a rotary attachment between the upper bar (2) and the support body (3) of the structure, the assembly forming a hinge with a single center of rotation, and **in that** the lower articulated attachment (21) is arranged in or is integral with the support body (3).

5. The hinge (1) according to any one of claims 1 to 3, **characterized in that** the structure comprises a first lever (4) and a second lever (5) attached in a rotating manner and by means of respective articulations (6 to 9) to the bar (2) and to the support body (3), the assembly forming a kind of articulated parallelogram.

6. The hinge (1) according to the preceding claim, **characterized in that** the lower articulated attachment (21) is arranged on the first lever (4) adjacent to the articulation (7) attaching said first lever (4) to the support body (3).

7. The hinge (1) according to the preceding claim, **characterized in that** the articulated attachment (21) is arranged below the imaginary straight line (17) attaching the articulations (6, 7) attaching the first lever (4), the upper bar (2) and the support body (3), such that the elongation of the transducer (12) tends to apply a moment on the first lever (4) in a direction opposite the direction of rotation of the first lever (4) during the hood opening operation.

8. The hinge (1) according to claim 5, **characterized in that** the articulated attachment (21) is supported in the support body (3) and is axially aligned with the articulation (7) attaching the first lever (4) and the mentioned support body (3).

9. The hinge (1, 100) according to any one of the preceding claims, **characterized in that** the retention means (10) further comprise an extending auxiliary bar (16) attached in an articulated manner at its ends to the upper bar (2) and to the hood support bar (11), tugging and guiding the movement of the hood support bar (11) when the transducer (12) is operated.

10. The hinge (1) according to the preceding claim, **characterized in that** the auxiliary bar is formed by two segments (16a, 16b) attached to one another in an articulated manner.

11. The hinge (1) according to claim 10 or 11, **characterized in that** the auxiliary bar (16) is prolonged beyond its articulated attachment (24) with the upper bar (2) to form a retaining extension (16a) limiting the elongation of the transducer (12) by abutting said extension (16a) with a stop body (20), integral with the support body (3) or with the upper bar (2).

12. The hinge (1, 100) according to any one of the preceding claims, **characterized in that** the electromechanical transducer (12) is formed by a pyrotechnic actuator comprising a cylinder (18) and plunger (19) assembly.

## Patentansprüche

1. Scharnier (1, 100) zur Gelenkverbindung einer Motorhaube an das Chassis eines Fahrzeugs, umfassend
- eine Struktur, die in einer Bewegungsebene angelenkt ist, welche einen Stützkörper (3) enthält, der dazu vorgesehen ist, an das Chassis des Fahrzeugs sicher gehalten zu werden; eine obere Stange (2), die über zumindest ein Gelenk (6) mit dem genannten Stützkörper (3) direkt oder durch einen Hebel (4) verbunden ist; eine Stützstange (11) für die Motorhaube; und Rückhaltemittel (10) für die sichere Befestigung der Stützstange (11) für die Motorhaube an der oberen Stange (2) unter normalen Einsatzbedingungen des Scharniers durch einen Riegel (13), der auf der Stützstange (11) montiert ist; wobei das Scharnier zusätzlich Folgendes umfasst
- einen elektromechanischen Wandler (12), welcher ein elektrisches Signal in einen mechanischen Antrieb umwandelt, mit einem ersten Ende und einem zweiten Ende (12a, 12b), die sich in der Bewegungsebene der Struktur auseinanderbewegen können, wenn der Wandler aktiviert ist und von einer eingezogenen Stellung auf eine gestreckte Stellung wechselt, wobei das Scharnier **dadurch gekennzeichnet ist, dass** es Folgendes umfasst
- eine obere Gelenkverbindung (22), welche das erste Ende (12a) des Wandlers (12) und den Riegel (13) verbindet, die mit dem Gelenk (6), das die obere Stange (2) und den Stützkörper (3) verbindet, wenn der Wandler (12) seine eingezogene Stellung einnimmt und die Stützstange (11) an der oberen Stange (2) befestigt ist, axial ausgerichtet ist, und
- eine untere Gelenkverbindung (21), welche das zweite Ende (12b) des Wandlers (12) mit einem Punkt verbindet, der auf einem des Stützkörpers (3) oder des Hebels (4) angeordnet ist, welche ihren Abstand in Bezug auf das Gelenk (6) während der Schließ- und Öffnungsvorgänge der Motorhaube unter normalen Einsatzbedingungen des Scharniers, d.h., während die Stützstange (11) an der oberen Stange (2) befestigt ist, beibehält, wobei sie als Stützpunkt wirkt, wenn der Wandler (12) gestreckt wird, wobei bewirkt wird, dass die obere Gelenkverbindung (22) eine Bewegung ausführt, die für die Betätigung des Riegels (13) ausreichend ist, wobei die Befestigung der Stützstange (11) an der oberen Stange (2) gelöst wird, und um diese zu heben, wird die Stützstange (11) entlang ihrer Bewegung bis zu einer Anstoßstellung mitgeführt.

2. Scharnier (1, 100) nach Anspruch 1, **dadurch gekennzeichnet, dass** der Riegel (13) ein Drehriegel ist, welcher einen Teil umfasst, der als Haken (14) ausgebildet ist und eine winkelige Befestigungsstellung (A) einnehmen kann, in welcher der Haken (14) einen Vorsprung (15), welcher zu diesem Zweck in der oberen Stange (2) vorgesehen ist, sicher umgibt und hält; und eine winkelige Freigabestellung (B) einnehmen kann, in welcher er den Vorsprung nicht umgibt und die relative Bewegung der Stützstange (11) für die Motorhaube in Bezug auf die obere Stange (2) nicht stört, und dass sich der Ort der oberen Gelenkverbindung (22) in Bezug auf die Drehachse (23) des Riegels (13) außermittig befindet.

3. Scharnier (1, 100) nach dem vorhergehenden Anspruch, **dadurch gekennzeichnet, dass** der Drehriegel (13) der Wirkung von Federmitteln (27) ausgesetzt ist, welche dazu neigen, diesen in seine Befestigungsstellung (A) anzuordnen.

4. Scharnier (100) nach einem der vorhergehenden Ansprüche, **dadurch gekennzeichnet, dass** das Gelenk (6) eine Drehverbindung zwischen der oberen Stange (2) und dem Stützkörper (3) der Struktur ist, wobei die Baugruppe ein Scharnier mit einem einzigen Drehzentrum bildet, und dass die untere Gelenkverbindung (21) in dem Stützkörper (3) angeordnet oder mit diesem einstückig gebildet ist.

5. Scharnier (1) nach einem der Ansprüche 1 bis 3, **dadurch gekennzeichnet, dass** die Struktur einen ersten Hebel (4) und einen zweiten Hebel (5) umfasst, welche drehbar und durch jeweilige Gelenke (6 bis 9) an der Stange (2) und an dem Stützkörper (3) verbunden sind, wobei die Baugruppe eine Art von gelenkigem Parallelogramm bildet.

6. Scharnier (1) nach dem vorhergehenden Anspruch, **dadurch gekennzeichnet, dass** die untere Gelenkverbindung (21) auf dem ersten Hebel (4) benachbart zum Gelenk (7), welches den genannten ersten Hebel (4) mit dem Stützkörper (3) verbindet, angeordnet ist.

7. Scharnier (1) nach dem vorhergehenden Anspruch, **dadurch gekennzeichnet, dass** die Gelenkverbindung (21) unter der gedachten Geraden (17) angeordnet ist, welche die Gelenke (6, 7), die den ersten Hebel (4), die obere Stange (2) und den Stützkörper (3) verbinden, verbindet, so dass die Ausdehnung des Wandlers (12) dazu neigt, einen Moment auf den ersten Hebel (4), in einer Richtung, die bezüglich der Drehrichtung des ersten Hebels (4) während des Öffnungsvorgangs der Motorhaube gegensinnig ist, anzuwenden.

8. Scharnier (1) nach Anspruch 5, **dadurch gekennzeichnet, dass** die Gelenkverbindung (21) in dem Stützkörper (3) abgestützt und mit dem Gelenk (7), das den ersten Hebel (4) und den genannten Stützkörper (3) verbindet, axial ausgerichtet ist.

9. Scharnier (1, 100) nach einem der vorhergehenden Ansprüche, **dadurch gekennzeichnet, dass** die Rückhaltemittel (10) zusätzlich eine sich erstreckende Hilfsstange (16) umfassen, welche an ihren Enden mit der oberen Stange (2) und mit der Stützstange (11) für die Motorhaube gelenkig verbunden ist, welche einen Zug bewirkt und die Bewegung der Stützstange (11) für die Motorhaube führt, wenn der Wandler (12) betätigt wird.

10. Scharnier (1) nach dem vorhergehenden Anspruch, **dadurch gekennzeichnet, dass** die Hilfsstange aus zwei Abschnitten (16a, 16b), welche miteinander gelenkig verbunden sind, besteht.

11. Scharnier (1) nach Anspruch 10 oder 11, **dadurch gekennzeichnet, dass** die Hilfsstange (16) über ihre Gelenkverbindung (24) hinaus mit der oberen Stange (2) verlängert ist, um eine rückhaltende Erstreckung (16a) zu bilden, welche die Ausdehnung des Wandlers (12) durch Anschlag der genannten Erstreckung (16a) mit einem Haltekörper (20), welcher mit dem Stützkörper (3) oder mit der oberen Stange (2) einstückig gebildet ist, begrenzt.

12. Scharnier (1, 100) nach einem der vorhergehenden Ansprüche, **dadurch gekennzeichnet, dass** der elektromechanische Wandler (12) von einem pyrotechnischen Aktuator gebildet ist, welcher eine Baugruppe aus Zylinder (18) und Kolben (19) umfasst.

## Revendications

1. Charnière (1, 100) pour la liaison articulée d'un capot au châssis d'un véhicule, comprenant
- une structure articulée dans un plan de mouvement incorporant un corps de support (3), destiné à être accroché en sécurité au châssis du véhicule; une barre supérieure (2), reliée au travers d'au moins une articulation (6) audit corps de support (3) directement ou au moyen d'un levier (4); une barre de support de capot (11); et des moyens de rétention (10) pour ancrer la barre de support de capot (11) en sécurité à la barre supérieure (2) sous des conditions normales d'utilisation de la charnière par moyen d'un verrou (13) assemblé sur la barre de support (11); la charnière comprenant, en outre,
- un transducteur électromécanique (12) convertissant un signal électrique en une transmission mécanique, avec une première et une deuxième extrémité (12a, 12b) susceptibles de s'éloigner l'une de l'autre dans le plan de mouvement de la structure lorsque le transducteur est activé et change de sa position rétractée à sa position étendue, la charnière étant **caractérisée en ce qu'**elle comprend
- une liaison articulée supérieure (22), connectant la première extrémité (12a) du transducteur (12) et le verrou (13), qui est alignée axialement avec l'articulation (6) reliant la barre supérieure (2) et le corps de support (3) lorsque le transducteur (12) adopte sa position rétractée et la barre de support (11) est encrée à la barre supérieure (2), et
- une liaison articulée inférieure (21), connectant la deuxième extrémité (12b) du transducteur (12) à un point, arrangée sur l'un du corps de supports (3) ou le levier (4), qui garde une distance par rapport à l'articulation (6) pendant les opérations de fermeture et d'ouverture du capot sous des conditions normales d'utilisation de la charnière, c'est-à-dire, pendant que la barre de support (11) est encrée à la barre supérieure (2), alors qu'elle agit comme un point de support lorsque le transducteur (12) est étendu, causant à l'liaison articulée supérieure (22) de bouger suffisamment pour opérer le verrou (13), l'ancrage de la barre de support (11) à la barre supérieure (2) étant désactivé, et pour le soulever, trainant la barre de support (11) tout au long de son mouvement, jusqu'à une position d'impact.

2. Charnière (1, 100) selon la revendication 1, **caractérisée en ce que** le verrou (13) est un verrou rotatif, comprenant une portion configurée comme un crochet (14), susceptible d'adopter une position d'ancrage angulaire (A), où le crochet (14) entoure et maintient en sécurité une projection (15) pourvue dans ce but dans la barre supérieure (2); et une position de libération angulaire (B); où il n'entoure pas la projection et n'interfère pas avec le mouvement relatif de la barre de support de capot (11) par rapport à la barre supérieure (2), et **en ce que** la localisation de la liaison articulée supérieure (22) est décentrée par rapport à l'arbre rotatif (23) du verrou (13).

3. Charnière (1, 100) selon la revendication précédente, **caractérisée en ce que** le verrou rotatif (13) est soumis à l'action de moyens élastiques (27) qui ont tendance à l'arranger dans sa position d'ancrage (A).

4. Charnière (100) selon l'une quelconque des revendications précédentes, **caractérisée en ce que** l'articulation (6) est une liaison rotative entre la barre supérieure (2) et le corps de support (3) de la structure, l'ensemble formant une charnière avec un centre de rotation unique, et **en ce que** la liaison articulée inférieure (21) est arrangée dans ou est intégral avec le corps de support (3).

5. Charnière (1) selon l'une quelconque des revendications 1 à 3, **caractérisée en ce que** la structure comprend un premier levier (4) et un deuxième levier (5) liés de façon rotative et par moyen d'articulations respectives (6 à 9) à la barre (2) et au corps de support (3), l'ensemble formant une sorte de parallélogramme articulé.

6. Charnière (1) selon la revendication précédente, **caractérisée en ce que** la liaison articulée inférieure (21) est arrangée sur le premier levier (4) adjacent à l'articulation (7) liant ledit premier levier (4) au corps de support (3).

7. Charnière (1) selon la revendication précédente, **caractérisée en ce que** la liaison articulée (21) est arrangée au dessous de la ligne droite imaginaire (17) liant les articulations (6, 7) liant le premier levier (4), la barre supérieure (2) et le corps de support (3), de façon à ce que l'allongement du transducteur (12) ait tendance à appliquer un moment sur le levier (4) dans un sens opposé au sens de rotation du premier levier(4) durant l'opération d'ouverture du capot.

8. Charnière (1) selon la revendication 5, **caractérisée en ce que** la liaison articulée (21) est supportée dans le corps de support (3) et est axialement alignée avec l'articulation (7) liant le premier levier (4) et ledit corps de support (3).

9. Charnière (1, 100) selon l'une quelconque des revendications précédentes, **caractérisée en ce que** les moyens de rétention (10) comprennent en outre une barre auxiliaire extensible (16) liée d'une façon articulée dans ses extrémités à la barre supérieure (2) et à la barre de support de capot (11), tirant et guidant les mouvement de la barre de support de capot (11) lorsque le transducteur (12) est opéré.

10. Charnière (1) selon la revendication précédente, **caractérisée en ce que** la barre auxiliaire est formée par deux segments (16a, 16b) liées l'un à l'autre de façon articulée.

11. Charnière (1) selon la revendication 10 ou 11, **caractérisée en ce que** la barre auxiliaire (16) est prolongée au delà de son liaison articulée (24) avec la barre supérieure (2) pour former une extension de rétention (16a) limitant l'allongement du transducteur (12) en attenant ladite extension (16a) avec un corps de butée (20), intégral avec le corps de support (3) ou avec la barre supérieure (2).

12. Charnière (1, 100) selon l'une quelconque des revendications précédentes, **caractérisée en ce que** le transducteur électromécanique (12) est formé par un actionneur pyrotechnique comprenant un assemblage de cylindre (18) et de piston (19).
